## Europäisches Patentamt
## European Patent Office
## Office européen des brevets

(19)

(11) Veröffentlichungsnummer: **0 065 624**
**B1**

(12) # EUROPÄISCHE PATENTSCHRIFT

(45) Veröffentlichungstag der Patentschrift:
**07.01.88**

(21) Anmeldenummer: **82101539.3**

(22) Anmeldetag: **27.02.82**

(51) Int. Cl.⁴: **B 65 G 67/04,** B 65 G 69/20,
B 65 G 53/60

(54) Verfahren zum Befüllen von Silofahrzeugbehältern.

(30) Priorität: **22.05.81 DE 3120356**

(43) Veröffentlichungstag der Anmeldung:
**01.12.82 Patentblatt 82/48**

(45) Bekanntmachung des Hinweises auf die Patenterteilung:
**07.01.88 Patentblatt 88/1**

(84) Benannte Vertragsstaaten:
**AT BE DE FR GB IT NL**

(56) Entgegenhaltungen:
**EP - A - 0 024 529**
**EP - A - 0 046 848**
**CH - A - 423 620**
**DE - A - 2 914 316**
**DE - C - 1 024 016**
**DE - U - 1 708 497**
**US - A - 2 641 335**

**Pumping Manual Trade & Technical ?????????LTP,**
**Morden, Surrey SM4 SEW, England, p. 81-82, 564-619**

(73) Patentinhaber: **Degussa Aktiengesellschaft,**
**Weissfrauenstrasse 9, D-6000 Frankfurt am Main 1 (DE)**

(72) Erfinder: **Eckert, Wolfgang, Goethestrasse 16,**
**D-7888 Rheinfelden (DE)**

## Beschreibung

Die Erfindung betrifft ein Verfahren zum Befüllen von Silofahrzeugbehältern mit pyrogen hergestelltem Siliciumdioxid, das in einem Vorratsbehälter fluidisiert wird.

Hochdisperse, pulverförmige Stoffe, wie pyrogen hergestellte Oxide von Metallen oder Metalloiden, wie z.B. $Al_2O_3$, $SiO_2$, zeichnen sich durch eine extreme Teilchenfeinheit und damit durch eine extrem niedrige Stampfdichte aus.

So weist pyrogen hergestelltes Siliciumdioxid je nach Typen einen mittleren Teilchendurchmesser in dem Bereich von 5 bis 50 nm auf. Die Stampfdichte des pyrogen hergestellten Siliciumdioxides kann zwischen 20 und 60 g/l liegen.

Aufgrund dieser extrem niedrigen Stampfdichte beanspruchen derartige hochdisperse, pulverförmige Stoffe ein grosses Transportvolumen.

Eine Verminderung des Transportvolumens durch zum Beispiel Vakuumentlüftung an Entlüfterwalzen vor dem Befüllen des Silofahrzeuges hat den Nachteil, dass bestimmte maximale Werte für die Stampfdichte überschritten werden. Die Folge ist, dass bestimmte anwendungstechnische Eigenschaften, wie z.B. das Verdickungsverhalten, nicht mehr den gestellten Anforderungen entspricht.

Weiter ist bekannt, dass eine Verbesserung des ungünstigen Volumen/Gewicht-Verhältnisses bei nicht entlüftetem hochdispersem, pulverförmigem Stoff durch die Einführung von Entlüftungsleitungen in den Silofahrzeugbehälter, durch die Luft während des Befüllungsvorganges abgesaugt wird, erreicht wird. Dieses Verfahren weist den Nachteil auf, dass während des Befüllens leicht ein zu grosser Unterdruck auftreten kann. Hierdurch ist die Gefahr einer Beschädigung des Silobehälters gegeben (EP-A-0 024 529).

Die DE-C-1 024 066 beschreibt einen Behälter zum Transport von pneumatisch gefördertem pulverförmigem Gut, bei welchem sich das Füllrohr dicht unter der oberen Behälterwand über deren ganze Länge erstreckt und an der Unterseite in der ganzen Länge offen ist. Die Luftaustrittsöffnung befindet sich in dem Behälter an dem dem Füllrohreintritt entgegengesetzten Ende des Behälters.

Dieser Behälter hat den Nachteil, dass nur Pulver mit hohem Schüttgewicht, wie z.B. Mehl, abgefüllt werden können. Pyrogen hergestelltes Siliciumdioxid kann aufgrund des sehr niedrigen Schüttgewichts nicht in diesem Behälter abgefüllt werden, weil keine Entlüftung und damit auch keine Verdichtung stattfindet (d.h. weil ein hochdisperser pulverförmiger Stoff wie pyrogen hergestelltes Siliciumdioxyd aufgrund der alleinigen Einwirkung der Schwerkraft nicht ausreichend verdichtet werden kann).

Die Aufgabe der Erfindung ist es, hochdisperse pulverförmige Stoffe wie pyrogen hergestellte Oxide von Metallen oder Metalloiden, wie z.B. $Al_2O_3$, $SiO_2$, bei dem Befüllen des Silofahrzeugbehälters so zu handhaben, dass das Transportgewicht deutlich erhöht wird, ohne dass die anwendungstechnischen Eigenschaften beeinträchtigt werden und aufwendige Massnahmen, wie das Absaugen von Luft, notwendig werden.

Gegenstand der Erfindung ist ein Verfahren zum Befüllen von Silofahrzeugen mit pyrogen hergestelltem Siliciumdioxid, das in einem Vorratsbehälter fluidisiert wird (wie dies schon aus der EP-A-0 024 529 bekannt ist), dadurch gekennzeichnet, dass das fluidisierte pyrogen hergestellte Siliciumdioxid mittels einer oder mehrerer Druckluftmembranpumpen an einer oder mehreren Stellen des Silofahrzeugbehälters einfüllt, wobei während des Befüllvorganges ein Überdruck von bis zu 0,1 bar unter der zulässigen Höchstdruckgrenze des Silofahrzeugbehälters in dem Silofahrzeugbehälter herrscht und die Luft sowohl durch geöffnete Ventile, die auf einem oder mehreren Domdeckeln angeordnet sind, als auch gleichzeitig über dem Boden des Silofahrzeugbehälters angeordnete Filterschläuche, die über eine gemeinsame Sammelleitung mit der Aussenluft verbunden sind, entweicht, während das pyrogen hergestellte Siliciumdioxid durch die den Domdeckeln angeordneten Filtertücher zurückgehalten wird.

In einer bevorzugten Ausführungsform des erfindungsgemässen Verfahrens kann man während des Einpumpens des pyrogen hergestellten Siliciumdioxides zusätzlich die Luft aus dem Silofahrzeugbehälter durch 6 bis 18 Stück Filterschläuche entweichen lassen. Diese sind auf dem Boden des Silowagens angeordnet und über eine gemeinsame Sammelleitung mit der Aussenluft verbunden.

Der Druckausgleich während des Befüllvorganges kann vollständig eintreten. Bei der Durchführung des erfindungsgemässen Verfahrens herrscht während des Befüllvorganges ein Überdruck von bis 0,1 bar unter der zulässigen Höchstdruckgrenze des Silofahrzeugbehälters in dem Silofahrzeugbehälter, ohne dass die anwendungstechnischen Eigenschaften des pyrogen hergestellten Siliciumdioxides beeinträchtigt werden.

Das erfindungsgemässe Verfahren weist den Vorteil auf, dass das pyrogen hergestellte Siliciumdioxid in grösster möglicher Menge in einen Silofahrzeugbehälter gepumpt werden kann, ohne dass eine zusätzliche Massnahme, wie das Absaugen von Luft aus dem Silofahrzeugbehälter notwendig ist (siehe z.B. die EP-A-0 024 529), und ohne dass anwendungstechnische Eigenschaften des eingefüllten pyrogen hergestellten Siliciumdioxides beeinträchtigt werden.

Aufgrund des erfindungsgemässen Verfahrens ist es möglich, beispielsweise 4 t pyrogen hergestelltes Siliciumdioxid in 2,5 Stunden in einen Silofahrzeugbehälter mit einem Rauminhalt von 55 m³ zu pumpen, ohne dass Luft über eine Saugleitung entfernt werden muss. Dabei erhöht sich die Stampfdichte des pyrogen hergestellten Siliciumdioxides auf das Doppelte, ohne dass die anwendungstechnischen Eigenschaften sich verschlechtern.

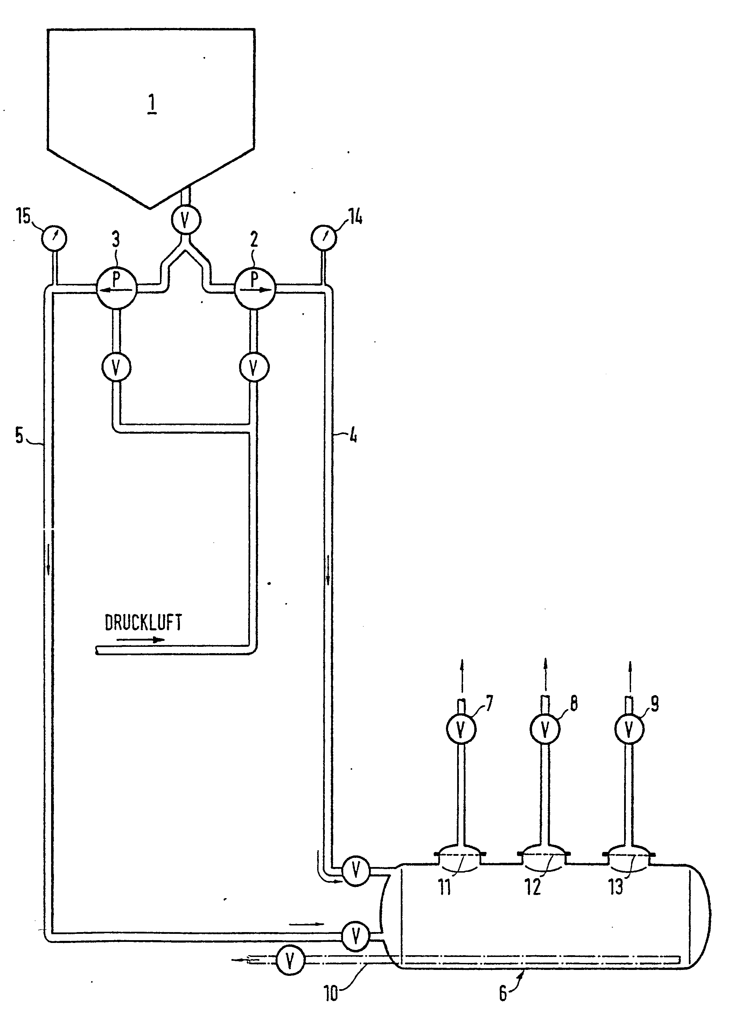

Das erfindungsgemässe Verfahren wird anhand der Zeichnung näher erläutert. So zeigt die Figur 1 eine schematische Anordnung der verwendeten Geräte.

Gemäss Figur 1 fällt pyrogen hergestelltes Siliciumdioxid aus dem Vorratsbehälter 1 auf die Membranpumpe 2 und/oder 3 und wird von dort über den Füllschlauch 4 und/oder 5 in den waagerecht oder gegebenenfalls schräggestellten Silofahrzeugbehälter 6 gepumpt.

Gleichzeitig entweicht Luft durch einen oder mehrere der jeweils auf dem geschlossenen Domdeckel angeordneten Ventile 7, 8 und 9 und/oder durch die auf dem Silofahrzeugbehälterboden angeordneten Filterschläuche 10. Die unterhalb der Domdeckel angeordneten Filtertücher 11, 12 und 13 halten den hochdispersen pulverförmigen Stoff, d.h. das pyrogen hergestelle Siliciumdioxid, zurück.

Der Druck wird während der Befüllung über das Manometer 14 und/oder 15 kontrolliert und gegebenenfalls korrigiert, falls er 1,9 bar überschreitet, wenn die Höchstdruckgrenze des Silofahrzeugbehälters bei 2,0 bar liegt.

## Patentanspruch

Verfahren zum Befüllen von Silofahrzeugen mit pyrogen hergestelltem Siliciumdioxid, das in einem Vorratsbehälter fluidisiert wird, dadurch gekennzeichnet, dass das fluidisierte pyrogen hergestellte Siliciumdioxid mittels einer oder mehrerer Druckluftmembranpumpen an einer oder mehreren Stellen des Silofahrzeugbehälters einfüllt, wobei während des Befüllvorganges ein Überdruck von bis zu 0,1 bar unter der zulässigen Höchstdruckgrenze des Silofahrzeugbehälters in dem Silofahrzeugbehälter herrscht, und die Luft sowohl durch geöffnete Ventile, die auf einem oder mehreren Domdeckeln angeordnet sind, als auch gleichzeitig über am Boden des Silofahrzeugbehälters angeordnete Filterschläuche, die über eine gemeinsame Sammelleitung mit der Aussenluft verbunden sind, entweicht, während das pyrogen hergestellte Siliciumdioxid durch die in den Domdeckeln angeordneten Filtertücher zurückgehalten wird.

## Claim

A method of filling silo vehicles with pyrogenically produced silicon dioxide with is fluidized in a storage container, characterised in that the fluidized pyrogenically produced silicon dioxide is charged to one or more positions of the silo vehicle container, by means of one or more pneumatic diaphragm pumps so that an excess pressure of up to 0.1 bar below the allowable maximum pressure limit of the silo vehicle container prevails therein during the filling process, and at the same time escapes through opened valves arranged on one or more dome-shaped covers and simultaneously through filter tubes which are arranged on the base of the silo vehicle container, and which are connected via a common collecting pipe to the external air, whilst the pyrogenically produced silicon dioxide is retained by filter cloths arranged in the dome-shaped covers.

## Revendication

Procédé pour le remplissage de véhicules-silo avec du bioxyde de silicium préparé par pyrogénation, qui est fluidisé dans un réservoir de stockage, caractérisé en ce que le bioxyde de silicium préparé par pyrogénation, fluidisé, est introduit au moyen d'une ou de plusieurs pompes à membrane à air comprimé, en une ou plusieurs positions du conteneur de véhicule-silo, ce par quoi, au cours de l'opération de remplissage, une surpression allant jusqu'à 0,1 bar au-dessous de la limite de pression maximale autorisée du conteneur de véhicule-silo règne dans le conteneur de véhicule-silo et l'air s'échappe, aussi bien par des soupapes ouvertes qui sont disposées sur un ou plusieurs couvercles en dôme, qu'en même temps par des sacs filtrants disposés sur le plancher du conteneur du véhicule-silo, qui sont reliés à l'air extérieur par un conduit collecteur commun, tandis que le bioxyde de silicium préparé par pyrogénation est retenu par les toiles filtrantes disposées dans le couvercles en dôme.

0 065 624

DRUCKLUFT

5